(19) **Europäisches Patentamt / European Patent Office / Office européen des brevets**

(11) **EP 4 556 132 A1**

(12) **EUROPEAN PATENT APPLICATION**
published in accordance with Art. 153(4) EPC

(43) Date of publication:
**21.05.2025 Bulletin 2025/21**

(21) Application number: **23867892.4**

(22) Date of filing: **28.07.2023**

(51) International Patent Classification (IPC):
*B21B 37/28* (2006.01)  *B21B 1/22* (2006.01)
*B21B 37/00* (2006.01)  *B21B 37/74* (2006.01)
*B21B 38/02* (2006.01)  *B21C 51/00* (2006.01)
*C21D 9/52* (2006.01)

(52) Cooperative Patent Classification (CPC):
**B21B 1/22; B21B 37/00; B21B 37/28; B21B 37/74; B21B 38/02; B21C 51/00; C21D 9/52**

(86) International application number:
**PCT/JP2023/027673**

(87) International publication number:
**WO 2024/062766 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 JP 2022150040**

(71) Applicant: JFE Steel Corporation
**Tokyo 100-0011 (JP)**

(72) Inventors:
- **KOBAYASHI, Hirokazu**
  **Tokyo 100-0011 (JP)**
- **KIMURA, Yukio**
  **Tokyo 100-0011 (JP)**
- **NAKAMURA, Mitsuru**
  **Tokyo 100-0011 (JP)**
- **BABA, Wataru**
  **Tokyo 100-0011 (JP)**

(74) Representative: Hoffmann Eitle
**Patent- und Rechtsanwälte PartmbB**
**Arabellastraße 30**
**81925 München (DE)**

(54) **METHOD OF PREDICTING FORM OF WARPING IN METAL STRIP, METHOD OF CONTROLLING FORM OF WARPING IN METAL STRIP, METHOD OF MANUFACTURING METAL STRIP, METHOD OF GENERATING WARPING-FORM PREDICTION MODEL, AND DEVICE FOR CONTROLLING FORM OF WARPING IN METAL STRIP**

(57)    To provide a metal-strip warped-shape prediction method capable of rapidly predicting an exit-side warped shape based on an entry-side warped shape of a metal strip in a metal-strip continuous annealing facility including a cooling zone for cooling the metal strip and a temper rolling mill that applies shape correction to the metal strip after cooling.

In a metal-strip continuous annealing facility including heating equipment that heats a metal strip, cooling equipment 30 that cools the metal strip 1 heated in a heating zone, a temper rolling mill 40 that corrects a shape of the metal strip 1 cooled by the cooling equipment, and an entry-side warped-shape measurement device 16 that measures an entry-side warped shape, which is a warped shape of the metal strip upstream of the temper rolling mill, between the cooling equipment 30 and the temper rolling mill 40, a metal-strip warped-shape prediction method for predicting an exit-side warped shape, which is a warped shape of the metal strip 1 downstream of the temper rolling mill 40, includes: predicting the exit-side warped shape based on the entry-side warped shape and at least one of operating parameters of the temper rolling mill 40.

# FIG. 1

CONTROL COMPUTER ~50

WARPED-SHAPE CONTROL DEVICE ~52

CONTROL CONTROLLER ~51

100

21

20

22

23

24

4  5  6  7  8  9  10  11  16  12  13  18

2

3

17

14  15

TRAVEL DIRECTION
OF METAL STRIP

**Description**

Technical Field

The present invention relates to a metal-strip warped-shape prediction method, a metal-strip warped-shape control method, a metal-strip manufacturing method, a warped-shape prediction model generation method, and a metal-strip warped-shape control device.

Background Art

In a metal-strip continuous annealing facility, it is important to control heat treatment conditions, such as heating and cooling, to impart the mechanical properties required for a metal strip being processed. In the manufacture of high-strength steel sheets, controlling heat treatment conditions often involves increasing the cooling rate for cooling the metal strip, as well as tempering treatment for reheating the metal strip after cooling, from the viewpoint of improving the press formability.

A continuous annealing facility for manufacturing high-strength steel sheets has a heating zone, a soaking zone, and a cooling zone. Cooling methods employed in the cooling zone include liquid quenching, roll cooling, air-water mixture (mist) cooling, gas jet cooling, and the like. An appropriate cooling method is selected accordingly in order to control the materials of the metal strip. For example, when manufacturing a high-strength steel sheet with high tensile strength, it is effective to increase the cooling rate of the metal strip in the cooling zone. However, when the cooling rate of the metal strip is increased, there is a problem that the shape of the metal strip becomes defective due to the influence of the thermal contraction of the strip and the volume expansion associated with the phase transformation of the metallic microstructure.

In the continuous annealing facility, a temper rolling mill is disposed to correct shape defects that remain after the metal strip is cooled. By applying temper rolling to the metal strip with this temper rolling mill, shape defects of the metal strip after cooling can be corrected. In the meanwhile, if the tensile strength of the metal strip is high, the yield stress after cooling is very high; even if the metal strip is subjected to temper rolling, the elongation percentage required for shape correction may not be imparted. Therefore, if the tensile strength of the metal strip is high, shape defects may remain in the metal strip that becomes the product after temper rolling.

In contrast, Patent Literature 1 discloses, in the case of cooling a metal strip using the liquid quenching method, a technique for constraining the metal strip with hold-down rolls during quenching within a temperature range specified by the starting and ending temperatures of the martensitic transformation of the metal strip. According to Patent Literature 1, constraining the metal strip within the above temperature range can suppress shape changes of the metal strip due to quenching.

Patent Literature 2 discloses, as a method for controlling the shape of a metal strip using a rolling mill such as a temper rolling mill, a technique for measuring the shape of the metal strip using a shape meter and operating a shape control actuator of the rolling mill based on the deviation between the measured shape and a target shape. In the technique disclosed in Patent Literature 2, a contact-type shape meter with multiple load cells embedded inside shape measurement rolls is used to estimate the difference in elongation in the width direction of the metal strip based on the contact load distribution in the width direction.

Patent Literature 3 discloses a technique for applying work rolls with a surface average roughness exceeding 10.0 $\mu$m as a method to reduce the warp height of a metal strip after temper rolling in the case of temper rolling a high-strength steel sheet.

Citation List

Patent Literature

PTL 1: Japanese Patent No. 6094722
PTL 2: Japanese Patent No. 6673285
PTL 3: Japanese Unexamined Patent Application Publication No. 2013-176802

Summary of Invention

Technical Problem

The technique disclosed in Patent Literature 1 specifies the temperature range in which phase transformation occurs in the metal strip, and requires that the metal strip be constrained by the hold-down rolls within that temperature range. Changes in the line speed of the metal strip, as an operating condition of the continuous annealing facility, cause changes in the cooling start temperature as well, resulting in fluctuations of the shape of the metal strip after cooling, indicating room for improvement. In particular, if the tensile strength of the metal strip is high, the shape of the metal strip may not be flattened, and parts where shape defects occur may remain in the longitudinal direction of the metal strip.

The technique disclosed in Patent Literature 2 flattens the shape of the metal strip through temper rolling. Since the shape of the metal strip can be dynamically controlled based on the measured shape of the metal strip taken on the exit side of the temper rolling mill, it is possible to stabilize the longitudinal shape of the metal strip. However, the shape meter described in Patent Literature 2 is a device that estimates the distribution of elongation in the width direction of the metal strip, and the shape meter is unable to measure the warped shapes with a W-shaped cross-section in the width direction that may occur in the high-strength steel sheet after quenching, as well as the warped shapes approximated with higher-order functions. Therefore, the technique in Patent Literature 2 is incapable of controlling the warped shapes with a W-shaped cross-section in the width direction and the warped shapes approximated with higher-order functions.

The technique disclosed in Patent Literature 3 performs temper rolling using work rolls having a specific surface roughness, and does not take into consideration the shape of the metal strip upstream of the temper rolling mill or changes in the surface roughness of the work rolls over time. Therefore, when the warp height of the metal strip upstream of the temper rolling mill increases, the warped shape cannot be sufficiently suppressed in response to this shape. As a result, the warp height of the metal strip may remain high even after temper rolling.

To solve these problems, it is effective to consider the warped shape of the metal strip upstream of the temper rolling mill (hereinafter this warped shape will be referred to as the entry-side warped shape) and rapidly predict the warped shape of the metal strip downstream of the temper rolling mill (hereinafter this warped shape will be referred to as the exit-side warped shape), and, based on the predicted exit-side warped shape, control the operating conditions of the continuous annealing facility. However, there has been a problem in that there is no method to rapidly predict the warped shape of the metal strip downstream of the temper rolling mill by taking the entry-side warped shape into consideration.

In order to solve the above-mentioned problem, it is an object of the present invention to provide a metal-strip warped-shape prediction method capable of rapidly predicting the exit-side warped shape of a metal strip based on the entry-side warped shape of the metal strip in a metal-strip continuous annealing facility including a cooling zone for cooling the metal strip and a temper rolling mill that applies shape correction to the metal strip after cooling, a metal-strip warped-shape control method using the warped-shape prediction method, a metal-strip warped-shape control device, a metal-strip manufacturing method, and a method for generating a warped-shape prediction model used in the metal-strip warped-shape prediction method.

Solution to Problem

The gist of the present invention capable of solving the above-mentioned problem is as follows.

[1] In a metal-strip continuous annealing facility including heating equipment that heats a metal strip, cooling equipment that cools the metal strip heated by the heating equipment, a temper rolling mill that corrects a shape of the metal strip cooled by the cooling equipment, and an entry-side warped-shape measurement device that measures an entry-side warped shape, which is a warped shape of the metal strip upstream of the temper rolling mill, between the cooling equipment and the temper rolling mill, a metal-strip warped-shape prediction method for predicting an exit-side warped shape, which is a warped shape of the metal strip downstream of the temper rolling mill, including: predicting the exit-side warped shape based on the entry-side warped shape and at least one of operating parameters of the temper rolling mill.

[2] The metal-strip warped-shape prediction method according to [1], wherein the exit-side warped shape is predicted using a warped-shape prediction model that receives input data including the entry-side warped shape and at least one of the operating parameters of the temper rolling mill, and outputs the exit-side warped shape.

[3] The metal-strip warped-shape prediction method according to [1], wherein the continuous annealing facility further includes a pre-cooling warped-shape measurement device provided upstream of the cooling equipment, and the exit-side warped shape is predicted based on a pre-cooling warped shape measured by the pre-cooling warped-shape measurement device, the entry-side warped shape measured by the entry-side warped-shape measurement device, and at least one of the operating parameters of the temper rolling mill.

[4] The metal-strip warped-shape prediction method according to [3], wherein the exit-side warped shape is predicted using a warped-shape prediction model that receives input data including the pre-cooling warped shape, the entry-side warped shape, and at least one of the operating parameters of the temper rolling mill, and outputs the exit-side warped shape.

[5] A metal-strip warped-shape control method including: in a case where the exit-side warped shape predicted by the metal-strip warped-shape prediction method according to any of [1] to [4] exceeds a target value, setting an operating parameter of the cooling equipment so that the exit-side warped shape is reduced.

[6] The metal-strip warped-shape control method according to [5], wherein the cooling equipment includes a coolant jet injection device with multiple nozzles that inject cooling fluid onto both sides of the metal strip, and at least one pair of hold-down rolls that constrain the metal strip; and the operating parameter of the cooling equipment is at least one of a push-in amount of the pair of hold-down rolls onto the metal strip, an offset amount between the pair of hold-down rolls, and a shift amount of the pair of hold-down rolls.

[7] A metal-strip manufacturing method for manufacturing a metal strip with a tensile strength of 980 MPa or higher using the metal-strip warped-shape control method according to [5] or [6].

[8] In a metal-strip continuous annealing facility including heating equipment that heats a metal strip, cooling equipment that cools the metal strip heated by the heating equipment, a temper rolling mill that corrects a shape of the metal strip cooled by the cooling equipment, an entry-side warped-shape measurement device that measures an entry-side warped shape, which is a warped shape of the metal strip upstream of the temper rolling mill, between the cooling equipment and the temper rolling mill, and an exit-side warped-shape measurement device that measures an exit-side warped shape, which is a warped shape of the metal strip downstream of the temper rolling mill, downstream of the temper rolling mill, a warped-shape prediction model generation method for generating a warped-shape prediction model that predicts an exit-side warped shape, which is a warped shape of the metal strip downstream of the temper rolling mill, including: acquiring multiple datasets, each of which includes a set of the entry-side warped shape measured by the entry-side warped-shape measurement device, at least one of operating parameters of the temper rolling mill, and the exit-side warped shape measured by the exit-side warped-shape measurement device, and generating a warped-shape prediction model that receives input data including the entry-side warped shape and at least one of the operating parameters of the temper rolling mill, and outputs the exit-side warped shape through machine learning using the acquired datasets as training data.

[9] The warped-shape prediction model generation method according to [8], wherein: the continuous annealing facility further includes a pre-cooling warped-shape measurement device provided upstream of the cooling equipment; and the method includes acquiring multiple datasets, each of which includes a set of a pre-cooling warped shape measured by the pre-cooling warped-shape measurement device, the entry-side warped shape, at least one of the operating parameters of the temper rolling mill, and the exit-side warped shape, and generating a warped-shape prediction model that receives input data including the pre-cooling warped shape, the entry-side warped shape, and at least one of the operating parameters of the temper rolling mill, and outputs the exit-side warped shape through machine learning using the acquired datasets as training data.

[10] In a metal-strip continuous annealing facility including heating equipment that heats a metal strip, cooling equipment that cools the metal strip heated by the heating equipment, a temper rolling mill that corrects a shape of the metal strip cooled by the cooling equipment, and an entry-side warped-shape measurement device that measures an entry-side warped shape, which is a warped shape of the metal strip upstream of the temper rolling mill, between the cooling equipment and the temper rolling mill, a metal-strip warped-shape control device that controls an exit-side warped shape, which is a warped shape of the metal strip downstream of the temper rolling mill, including: an acquisition section that acquires the entry-side warped shape measured by the entry-side warped-shape measurement device, and at least one of operating parameters of the temper rolling mill; a warped-shape prediction section that predicts the exit-side warped shape using a warped-shape prediction model that receives input data including the entry-side warped shape and at least one of the operating parameters of the temper rolling mill, and outputs the exit-side warped shape; and an operating-parameter specification section that, in a case where the exit-side warped shape predicted by the warped-shape prediction section exceeds a target value, specifies an operating parameter of the cooling equipment so that the exit-side warped shape is reduced.

[11] The metal-strip warped-shape control device according to [10], wherein: the continuous annealing facility further includes a pre-cooling warped-shape measurement device provided upstream of the cooling equipment; the acquisition section further acquires a pre-cooling warped shape measured by the pre-cooling warped-shape measurement device; and the warped-shape prediction section predicts the exit-side warped shape using a warped-shape prediction model that receives input data including the pre-cooling warped shape, the entry-side warped shape, and at least one of the operating parameters of the temper rolling mill, and outputs the exit-side warped shape. Advantageous Effects of Invention

According to the present invention, in a metal-strip continuous annealing facility including heating equipment that heats a metal strip, cooling equipment that cools the metal strip, and a temper rolling mill that applies shape correction to the metal strip after cooling, the exit-side warped shape on the exit side of the temper rolling mill can be rapidly predicted based on the entry-side warped shape. By specifying an operating parameter of the cooling equipment so that the predicted exit-side warped shape is reduced, the operating parameter can be set to an operating condition of the cooling equipment, thereby achieving the manufacture of a metal strip with a reduced warp height in the width direction.

Brief Description of Drawings

[Fig. 1] Fig. 1 is a schematic diagram illustrating a continuous annealing facility, which is an example of a metal-strip manufacturing facility capable of implementing a metal-strip warped-shape prediction method and a metal-strip warped-shape control method according to the present embodiment.
[Fig. 2] Fig. 2 is a schematic diagram illustrating an example of cooling equipment, which constitutes a cooling zone, using the water cooling method.
[Fig. 3] Fig. 3 includes schematic diagrams each illustrating an example of the arrangement of a pair of hold-down rolls disposed offset, on the front and back sides of a metal strip, in the travel direction of the metal strip.
[Fig. 4] Fig. 4 is a schematic diagram illustrating an example of a temper rolling system including a temper rolling mill.
[Fig. 5] Fig. 5 is a schematic diagram illustrating an example of the warped shape in the width direction of the metal strip.
[Fig. 6] Fig. 6 is a schematic diagram illustrating a state in which the warped shape of the metal strip is measured using a laser-scanning-type laser rangefinder.
[Fig. 7] Fig. 7 is a schematic diagram illustrating a state in which the warped shape is measured using multiple laser-scanning-type laser rangefinders.
[Fig. 8] Fig. 8 is a schematic diagram illustrating an example of the configuration of a warped-shape control device.
[Fig. 9] Fig. 9 is a diagram illustrating an example of a machine learning model using a neural network.
[Fig. 10] Fig. 10 is a flowchart illustrating the flow of a metal-strip warped-shape control method according to the present embodiment.

Description of Embodiments

Hereinafter, the present invention will be specifically described through embodiments of the present invention. The following embodiments illustrate preferred examples of the present invention, and the present invention is not limited in any way by these embodiments.

A metal-strip warped-shape prediction method and a metal-strip warped-shape control method according to an embodiment of the present invention can be implemented using a continuous annealing facility including heating equipment that heats a metal strip that is continuously conveyed, cooling equipment that cools the metal strip heated by the heating equipment, a temper rolling mill that applies shape correction to the metal strip cooled by the cooling equipment, and an entry-side warped-shape measurement device that measures an entry-side warped shape, which is the warped shape of the metal strip upstream of the temper rolling mill, between the cooling equipment and the temper rolling mill. The continuous annealing facility is, for example, a facility for manufacturing metal strips by continuously annealing, for example, a metal strip having a thickness of 0.4 to 3.2 mm, a width of 700 to 1800 mm, and a length of 600 to 4000 m.

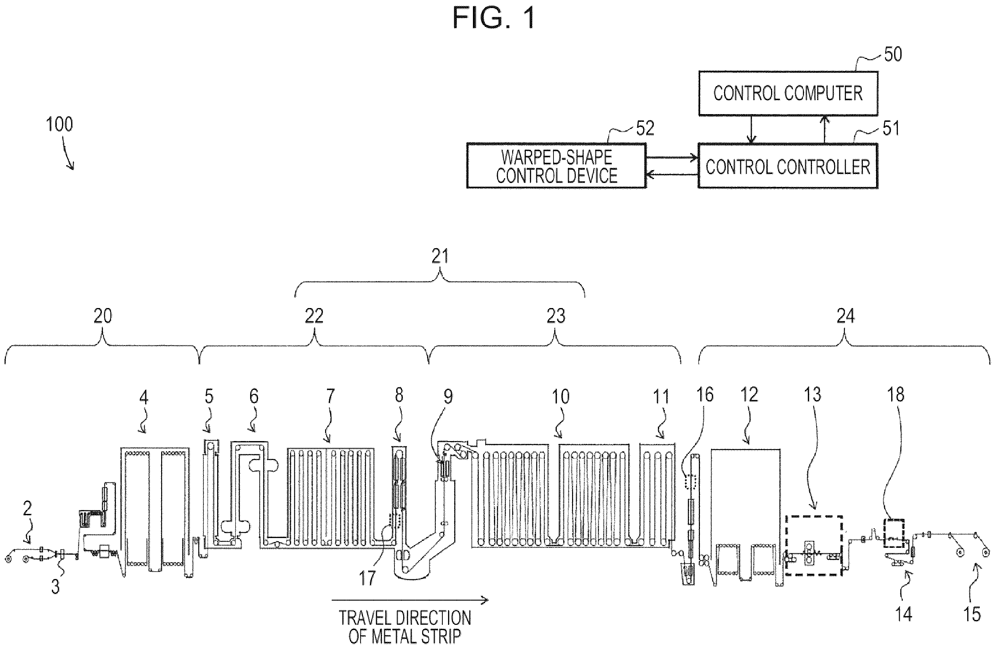

Fig. 1 is a schematic diagram illustrating a continuous annealing facility 100, which is an example of a metal-strip manufacturing facility that can implement the metal-strip warped-shape prediction method and the metal-strip warped-shape control method according to the present embodiment. The continuous annealing facility 100 is broadly divided into entry-side facility 20, furnace facility 21, and exit-side facility 24. The entry-side facility 20 includes a payoff reel 2, a welding machine 3, and an entry-side looper 4. The furnace facility 21 is constituted of annealing facility 22 and reheating facility 23. The annealing facility 22 includes a heating zone 6, a soaking zone 7, and a cooling zone 8, and may include a preheating zone 5 upstream of the heating zone 6. The reheating facility 23 includes a reheating zone 9, an overaging zone 10, and a final cooling zone 11, and an induction heating device is disposed in the reheating zone 9. The exit-side facility 24 includes an exit-side looper 12, an inspection table 14, and a tension reel 15.

Heating equipment that heats a metal strip 1 is disposed in the heating zone 6. Using the heating equipment, the metal strip 1 is heated to a preset temperature within a range of about 600 to 900°C in accordance with the chemical composition of the metal strip 1. In the heating zone 6, a direct-fired or radiant combustion burner is used. The process performed in the heating zone 6 is called the heating step. A device for maintaining the metal strip 1 at a predetermined temperature is disposed in the soaking zone 7. The device for maintaining the metal strip 1 at the predetermined temperature is a device with heating capacity sufficient to compensate for heat dissipation from the furnace body and the like.

Cooling equipment that cools the metal strip 1 to a predetermined temperature is disposed in the cooling zone 8. As cooling means of the cooling equipment, liquid cooling, gas jet cooling, roll cooling, mist cooling (gas-liquid mixture cooling), and the like are used. Liquid cooling is often performed by water cooling (water quenching) using water. Water cooling is a cooling means that immerses the metal strip 1 in a dipping tank installed downstream of the soaking zone 7 to cool it. Gas jet cooling is a cooling means that blows gas from nozzles onto the surface of the metal strip 1. Roll cooling is a cooling means that brings the metal strip 1 into contact with water-cooling rolls to cool it. Mist cooling is a cooling means that sprays water in a fine mist to cool the metal strip 1 by absorbing the heat of vaporization. In mist cooling, the size of the water droplets sprayed is often about 0.1 to 1 mm.

The reheating facility 23 is disposed downstream of the cooling zone 8. After the metal strip 1 is cooled to a predetermined temperature in the cooling zone 8, the metal strip 1 is reheated to approximately 300 to 400°C using the induction heating device or the like disposed in the reheating zone 9. The overaging zone 10 is a device that performs an overaging process in which the reheated metal strip 1 is held for a predetermined period of time. The final cooling zone 11 is a device that finally cools the overaged metal strip 1 to nearly room temperature. Note that the reheating facility 23 is not indispensable equipment for continuous annealing facilities; some continuous annealing facilities are not equipped with the reheating equipment 23.

The exit-side looper 12 is a device that temporarily stores the metal strip 1 to make adjustments between the line speed of the metal strip 1 in the furnace equipment 21 and the processing speed of the exit-side facility 24. At the inspection table 14, inspections of the dimensional accuracy and surface quality of the metal strip 1 are conducted. The tension reel 15 is a device that winds up the metal strip 1 in a coil shape. The metal strip 1, which is wound-up into a coil by the tension reel 15 and determined to be acceptable through quality inspection at the inspection table 14, may either be shipped as a product coil or sent to surface treatment equipment for plating the metal strip 1, where surface treatment is performed. In contrast, the metal strip 1, which is wound-up into a coil by the tension reel 15 and determined to be unacceptable or on hold through quality inspection at the inspection table 14, is sent to a recoiling line, where adjustments to the dimensions and weight of the metal strip 1 are made, samples for quality verification are collected, shape and dimensional inspections are conducted, and the coil is rewound.

Temper rolling system 13 is disposed between the exit-side looper 12 and the inspection table 14. Work rolls used in the temper rolling system 13 need to be replaced at a predetermined timing. By disposing the temper rolling system 13 downstream of the exit-side looper 12, changes in the speed of the metal strip 1 in the furnace facility 21 when replacing the work rolls can be suppressed by the exit-side looper 12.

The continuous annealing facility 100 includes an entry-side warped-shape measurement device 16. The entry-side warped-shape measurement device 16 is provided between the cooling equipment in the cooling zone 8 and the temper rolling system 13, and measures the entry-side warped shape of the metal strip 1. Additionally, the continuous annealing facility 100 may include a pre-cooling warped-shape measurement device 17 and an exit-side warped-shape measurement device 18. The pre-cooling warped-shape measurement device 17 is provided upstream of the cooling equipment disposed in the cooling zone 8, and measures the warped shape of the metal strip 1 upstream of the cooling equipment disposed in the cooling zone 8 (hereinafter this warped shape will be referred to as the pre-cooling warped shape). The pre-cooling warped-shape measurement device 17 is preferably disposed between the soaking zone 7 and the cooling zone 8. This allows the measurement of the warped shape of the metal strip 1 immediately before cooling.

The exit-side warped-shape measurement device 18 is provided downstream of the temper rolling system 13, and measures the exit-side warped shape of the metal strip 1 after temper rolling. The exit-side warped-shape measurement device 18 is preferably disposed in the vicinity of the inspection table 14. In some cases, the exit-side warped shape of the metal strip 1 serves as an item of product quality inspection. Therefore, by disposing the exit-side warped-shape measurement device 18 in the vicinity of the inspection table 14, it becomes easier to associate the exit-side warped shape of the metal strip 1 with the results of other quality inspections. Typically, the distance that the metal strip 1 is conveyed from the temper rolling system 13 to the inspection table 14 ranges from 20 to 100 m, and the conveying time from the temper rolling system 13 to the inspection table 14 is about 2 to 120 seconds.

The continuous annealing facility 100 includes a control computer 50 for managing the operation of the continuous annealing facility 100, a control controller 51, and a warped-shape control device 52. The control computer 50 and the warped-shape control device 52 are both configured with general-purpose computers, such as workstations or personal computers. A dedicated computer for executing sequence control, such as a PLC (programmable logic controller), is used for the control controller 51.

The control controller 51 sets the operating conditions of each device and equipment constituting the continuous annealing facility 100 and acquires sensor information from various sensors provided in the continuous annealing facility 100. The control computer 50 specifies the manufacturing conditions of each device and equipment of the continuous annealing facility 100 for manufacturing the metal strip 1 of a desired product quality. Additionally, the control computer 50 collects the sensor information acquired by the control controller 51, and acquires and stores various types of information related to the actual operating performance of the metal strip 1. Furthermore, the control computer 50 performs tracking of the weld between the preceding metal strip 1 and the succeeding metal strip 1, which are connected by a welding machine or the like within the upstream part of the continuous annealing facility 100, to specify the current position of the weld within the continuous annealing facility 100.

The warped-shape control device 52 predicts the exit-side warped shape of the metal strip 1 based on the entry-side warped shape measured by the entry-side warped-shape measurement device 16, and at least one of the operating parameters of a temper rolling mill 40. The warped-shape control device 52 predicts the exit-side warped shape of the metal strip 1 using a warped-shape prediction model that receives input data including the entry-side warped shape and at least one of the operating parameters of the temper rolling mill 40, and outputs the exit-side warped shape. The warped-shape control device 52 uses, as the warped-shape prediction model, a trained machine learning model that has been trained through machine learning, for example.

Next, the cooling zone 8 will be described. The cooling zone 8 in the continuous annealing facility 100 includes the cooling equipment, which cools the metal strip 1 heated in the heating zone 6. The process executed in the cooling zone 8 is called the cooling step. The cooling method applied to the cooling zone 8 is preferably water cooling (water quenching), which is liquid cooling with water as a refrigerant. When the metal strip 1 heated in the heating zone 6 is cooled by water cooling to a temperature below a martensite start temperature (Ms) or a bainite transformation start temperature (Bf), the metal strip 1 deforms, changing the warped shape of the metal strip 1. In the case where the warped shape of the metal strip 1 changes in this way, it often changes in the direction where the warp height increases.

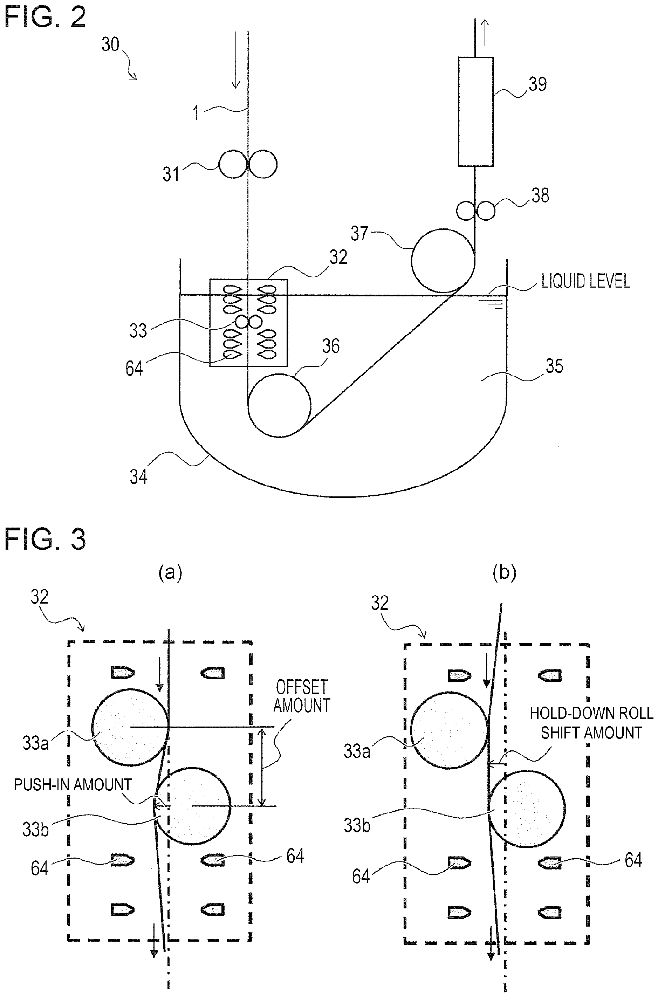

Fig. 2 is a schematic diagram illustrating an example of cooling equipment 30, which constitutes the cooling zone 8, using the water cooling method. The cooling equipment 30 includes a coolant jet injection device 32 with multiple water injection nozzles 64, a dipping tank 34, and deflector rolls 36 and 37. The cooling equipment 30 may also have pinch rolls 31 for preventing fluttering of the metal strip 1. The metal strip 1 that has passed through the dipping tank 34 is processed by wringer rolls 38, which remove the water adhered to the metal strip 1. The metal strip 1 is then dried in a drying furnace 39, and then sent to the reheating zone 9.

The dipping tank 34 is configured in a container shape. The dipping tank 34 stores a cooling fluid 35 used for immersing and cooling the metal strip 1. In order to suppress a temperature rise of the cooling fluid 35 stored in the dipping tank 34 and maintain the water temperature of the cooling fluid 35 within a predetermined range, a cooling chiller, which is not illustrated, used for circulating and cooling the cooling fluid 35 in the dipping tank 34 may be provided.

The coolant jet injection device 32 injects the cooling fluid 35 to the metal strip 1 to cool it. The coolant jet injection device 32 is equipped with multiple pairs of water injection nozzles 64 for injecting the cooling fluid 35 onto both sides of the traveling metal strip 1. The metal strip 1 that has passed through the soaking zone 7 can be cooled efficiently by injecting cooling fluid onto both sides, the front and back sides, of the metal strip 1 from the multiple pairs of water injection nozzles 64.

The coolant jet injection device 32 includes a pair of hold-down rolls 33 for suppressing the deformation of the metal strip 1 and preventing the deterioration of the shape of the metal strip 1. The hold-down rolls 33 are arranged to sandwich the metal strip 1 from the front and back sides. The paired hold-down rolls 33 may be disposed offset, on the front and back sides of the metal strip 1, in the travel direction of the metal strip 1.

Fig. 3 includes schematic diagrams each illustrating an example of the arrangement of a pair of hold-down rolls 33a and 33b disposed offset, on the front and back sides of the metal strip 1, in the travel direction of the metal strip 1. Fig. 3(a) is a schematic diagram describing a push-in amount and an offset amount. Fig. 3(b) is a schematic diagram describing the shift amount of the constraint rolls.

As illustrated in Fig. 3(a), the offset amount, in the travel direction of the metal strip 1, of the hold-down rolls 33a and 33b disposed on the front and back is called the offset amount (offset between the hold-down rolls). Additionally, at least one of the hold-down rolls 33a and 33b disposed on the front and back sides preferably has a position adjusting function that allows for displacement of the hold-down roll 33 toward the metal strip 1 so that the amount of pushing-in onto the metal strip 1 is changeable.

The offset amount, in the direction perpendicular to the travel direction of the metal strip 1, of the hold-down rolls 33a and 33b disposed on the front and back of the metal strip 1 is called the push-in amount or the hold-down roll gap. In the example illustrated in Fig. 3(a), the hold-down roll 33a is fixed, while the hold-down roll 33b is movable, allowing the hold-down roll 33b to be pressed against the metal strip 1. In this case, the amount by which the movable hold-down roll 33b protrudes horizontally from the pass line of the metal strip 1 is referred to as the push-in amount of the hold-down roll.

Furthermore, the coolant jet injection device 32 may be equipped with multiple pairs of hold-down rolls 33 in the travel direction of the metal strip 1. By disposing the multiple pairs of hold-down rolls 33 along with the coolant jet injection device 32, the deformation of the metal strip 1 can be more effectively constrained between the martensite start temperature (Ms) and end temperature (Mf) of the metal strip 1. This allows for the suppression of shape defects of the metal strip 1 caused by thermal contraction that occurs during quenching of the metal strip 1, as well as by volume changes due to phase transformation. In this case, the push-in amount of the hold-down roll is defined for each hold-down roll that can be pressed.

Additionally, the pair of hold-down rolls 33a and 33b may be displaced toward either the front or back side of the metal strip 1 while maintaining a constant separation distance between the hold-down rolls 33a and 33b in the direction perpendicular to the surface of the metal strip 1 (hold-down roll shift). In the example illustrated in Fig. 3(b), the metal strip 1 is displaced in one direction while maintaining the offset amount (push-in amount), in the direction perpendicular to the travel direction of the metal strip 1, of the hold-down rolls 33a and 33b disposed on the front and back. The average value of the displacement amount of the hold-down roll 33a and the displacement amount of the hold-down roll 33b is referred to as the shift amount of the hold-down rolls. By shifting the hold-down rolls, the distance between the water injection nozzles 64 and the metal strip 1 becomes shorter on one side and longer on the other side. This causes a difference in cooling capacity between the front and back sides of the metal strip 1, leading to a difference in thermal strain that occurs on the front and back sides of the metal strip 1, thereby changing the warped shape of the metal strip 1.

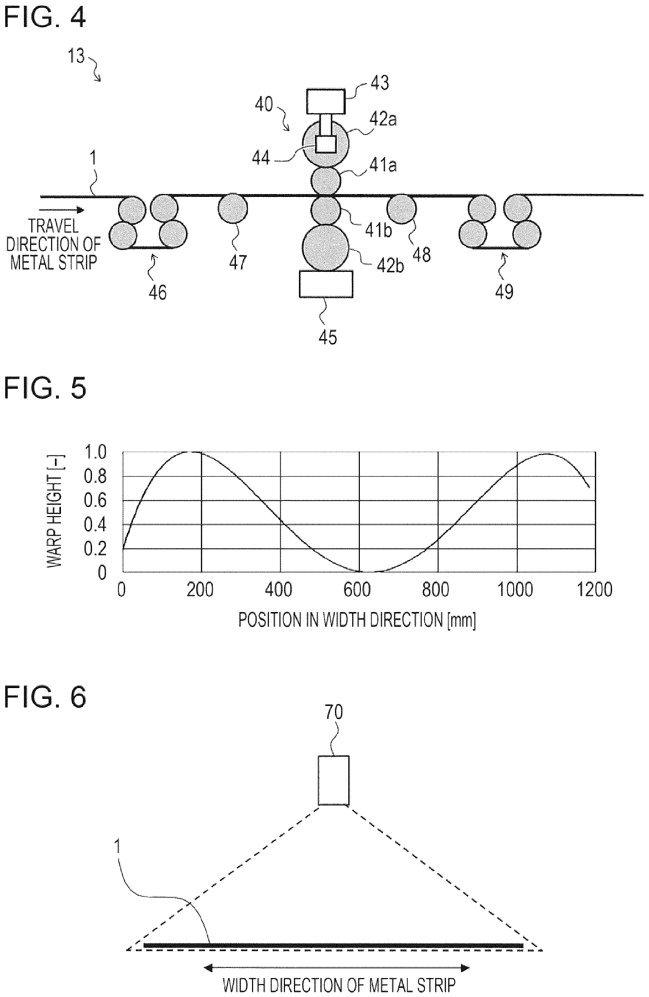

Next, the temper rolling system 13 will be described. Fig. 4 is a schematic diagram illustrating an example of the temper rolling system 13 including the temper rolling mill 40. The temper rolling mill 40 is a device that imparts an elongation of about 0.1 to 3.0% to the metal strip 1 to flatten the shape of the metal strip 1.

The temper rolling system 13 includes the temper rolling mill 40, entry-side bridle rolls 46, an entry-side tension meter 47, an exit-side tension meter 48, and exit-side bridle rolls 49. The temper rolling mill 40 includes a pair of work rolls 41a and 41b that come into direct contact with the metal strip 1 being rolled and apply rolling, and backup rolls 42a and 42b that support the pair of work rolls 41a and 41b from above and below to suppress the deflection of the work rolls 41a and 41b. At least one of the work rolls 41a and 41b and the backup rolls 42a and 42b is connected to a drive motor through a coupling and a reducer at one of its two end portions, and the drive motor rotates this roll. The backup roll 42a is supported by a bearing box (backup roll chock) 44 at a shaft end portion. A screw-down device 43 adjusts the roll gap, which is the space between the work roll 41a and the work roll 41b, by vertically displacing the bearing box 44. A load detector 45 detects the rolling load of the temper rolling mill 40.

The entry-side bridle rolls 46, the entry-side tension meter 47, the exit-side tension meter 48, and the exit-side bridle rolls 49 are arranged before and after the temper rolling mill 40. The entry-side bridle rolls 46 and the exit-side bridle rolls 49 apply appropriate tension to the metal strip 1. The entry-side tension meter 47 and the exit-side tension meter 48 are provided respectively between the temper rolling mill 40 and the entry-side bridle rolls 46 and between the temper rolling mill 40 and the exit-side bridle rolls 49. The entry-side tension meter 47 and the exit-side tension meter 48 measure the tension of the metal strip 1 on the entry side and the exit side of the temper rolling mill 40.

The temper rolling mill 40 rolls the metal strip 1 at a predetermined elongation percentage. The elongation percentage is the extension percentage of the metal strip 1 before and after temper rolling, and is defined as the percentage of increase in the length of the metal strip 1 before and after temper rolling. The elongation percentage is measured by the circumferential speed difference between the circumferential speed of the entry-side bridle rolls 46 and the circumferential speed of the exit-side bridle rolls 49.

Next, warped shapes predicted and controlled by the metal-strip warped-shape prediction method and warped-shape control method according to the present embodiment will be described. As for the warpage of the metal strip 1, L-warping (longitudinal warping) and C-warping (transverse warping) are known. Among them, C-warping is included, but L-warping is not included, in warped shapes predicted and controlled by the metal-strip warped-shape prediction method and warped-shape control method according to the present embodiment. L-warping is constrained by line tension applied when the metal strip 1 is continuously conveyed, and it is difficult to measure L-warping online. The warped Ashapes predicted and controlled by the metal-strip warped-shape prediction method and warped-shape control method according to the present embodiment include not only C-warping, where the cross-sectional shape in the width direction of the metal strip 1 is approximated with a quadratic function or circular arc, but also warping with a W-shaped cross-section in the width direction, as well as warping approximated with a higher-order function of third degree or higher.

The warping in the width direction of the metal strip 1 occurs when in-plane stress generated in the width direction of the metal strip 1, due to the cooling step, etc., cannot be maintained within the plane and causes out-of-plane displacement due to buckling. In contrast, wavy shape defects occur when the elongation of in the longitudinal direction of the metal strip 1 is distributed in the width direction, causing the in-plane stress generated in the longitudinal direction of the metal strip 1 to fail to be maintained within the plane, leading to out-of-plane displacement due to buckling. While both the warped shape in the width direction and the wavy shape are common in that they are out-of-plane deformations caused by buckling, they differ in that the direction of the stress causing the buckling is either in the width direction or the longitudinal direction.

Therefore, in the case of wavy shape, applying tension in the longitudinal direction of the metal strip 1 absorbs the elongation difference in the width direction (the difference in elongation in the width direction), causing the shape defect of the metal strip 1 to become latent (changing into an apparently flat shape). In contrast, in the case of warped shapes in the width direction, changing the tension applied in the longitudinal direction of the metal strip 1 does not significantly affect the stress in the width direction. Therefore, changing the tension applied in the longitudinal direction of the metal strip 1 does not change the warped shape in the width direction of the metal strip 1.

The contact-type shape meter disclosed in Patent Literature 2 applies high tension (e.g., 100 to 200 MPa) between the temper rolling mill and the exit-side bridle rolls to make the shape defects of the metal strip 1 latent and measure the contact load distribution in the width direction. That is, such a contact-type shape meter is used to measure the wavy shape of the metal strip 1, but it does not measure the warped shapes in the width direction. Additionally, there is a difference that, while wavy shape involves periodic changes of displacement in the height direction of the metal strip 1 relative to the longitudinal direction of the metal strip 1, warped shapes do not exhibit periodic displacement relative to the longitudinal direction of the metal strip 1. Note that the period of the wavy shape of the metal strip 1 is often an interval of about 0.5 to 5 m in the longitudinal direction of the metal strip 1.

Fig. 5 is a schematic diagram illustrating an example of the warped shape in the width direction of the metal strip 1. The warped shape illustrated in Fig. 5 is an example of the warped shape measured after processing the metal strip 1, made of a high-strength steel sheet with a thickness of 1.2 mm and a width of 1200 mm, through the cooling step of water quenching and rolling with the temper rolling mill 40. Note that the warp height illustrated in Fig. 5 is standardized based on the maximum height in the width direction. As illustrated in Fig. 5, when the metal strip 1, made of high-strength steel sheet, is quenched by water quenching, the warped shape in the width direction becomes a warped shape approximated with a higher-order function.

Next, the entry-side warped-shape measurement device 16 will be described. The entry-side warped-shape measurement device 16 measures the entry-side warped shape of the conveyed metal strip 1 and acquires information regarding the height of the metal strip 1 in the width direction of the metal strip 1. The information regarding the height of the metal strip 1 may be, for example, the average value, maximum height, or standard deviation of the warp height in the width direction of the metal strip 1, or may also be information specifying the distribution of the warp height.

Information specifying the distribution of the warp height of the metal strip 1 is, for example, information indicating the distribution of the warp height at each position in the width direction of the metal strip 1 illustrated in Fig. 5. The entry-side warped-shape measurement device 16 may approximate the curve representing the distribution of the warp height in the width direction using an arbitrary function and acquire the coefficients that define the approximated function as the entry-side warped shape of the metal strip 1.

The entry-side warped-shape measurement device 16 may acquire the curvature distribution specified from the curve, illustrated in Fig. 5, representing the relationship between the position and the warp height in the width direction as the entry-side warped shape of the metal strip 1. Furthermore, the entry-side warped-shape measurement device 16 may perform a discrete Fourier transform on the positions and the warp heights in the width direction illustrated in Fig. 5, extracting the strength per each unevenness in the width direction, and acquire the relationship between the interval of the unevenness and the spectral intensity calculated by the discrete Fourier transform as the entry-side warped shape of the metal strip 1.

Additionally, the entry-side warped-shape measurement device 16 may determine the distribution of the warp height at each position in the width direction of the metal strip 1 by averaging the warp height over a range of about 1 to 5 meters in the longitudinal direction of the metal strip 1. By averaging the warp height in the longitudinal direction of the metal strip 1 over a range of about 1 to 5 m in this way, even if the metal strip 1 contains both the warped shape and wavy shape, the wavy shape can be excluded, allowing the warped shape to be specified.

As for the entry-side warped-shape measurement device 16, any device that can measure the height distribution in the width direction of the metal strip 1 may be used. For example, a laser rangefinder may be used as the entry-side warped-shape measurement device 16. Multiple laser rangefinders, which are contactless rangefinders, may be arranged at different positions in the width direction of the conveyed metal strip 1, and the warp height at each position may be measured using these laser rangefinders (distance measurement method). For example, when measuring the warp height of the metal strip 1 with a width of 800 to 1900 mm using laser rangefinders, it is preferable that the number of laser rangefinders arranged at different positions in the width direction be 3 or more and 100 or less. More preferably, the number of laser rangefinders is 10 to 20. Using fewer than three laser rangefinders makes it difficult to specify the warped shape in the width direction of the metal strip 1, which is not preferable. Using more than 100 laser rangefinders does not improve the accuracy of measuring the warped shape, and it increases equipment costs, which is not preferable.

Fig. 6 is a schematic diagram illustrating a state in which the warped shape of the metal strip 1 is measured using a laser-scanning-type laser rangefinder. As illustrated in Fig. 6, a laser-scanning-type laser rangefinder 70 may be used as the entry-side warped-shape measurement device 16. The laser-scanning-type laser rangefinder 70 scans with a laser beam in a fan shape to measure the distance to each position in the width direction of the metal strip 1 and calculates the height at each position in the width direction based on the measured distances. Using the laser-scanning-type laser rangefinder 70 makes it possible to scan with a laser beam along the width direction from above the conveyed metal strip 1 and measure the warp height in the width direction of the metal strip 1.

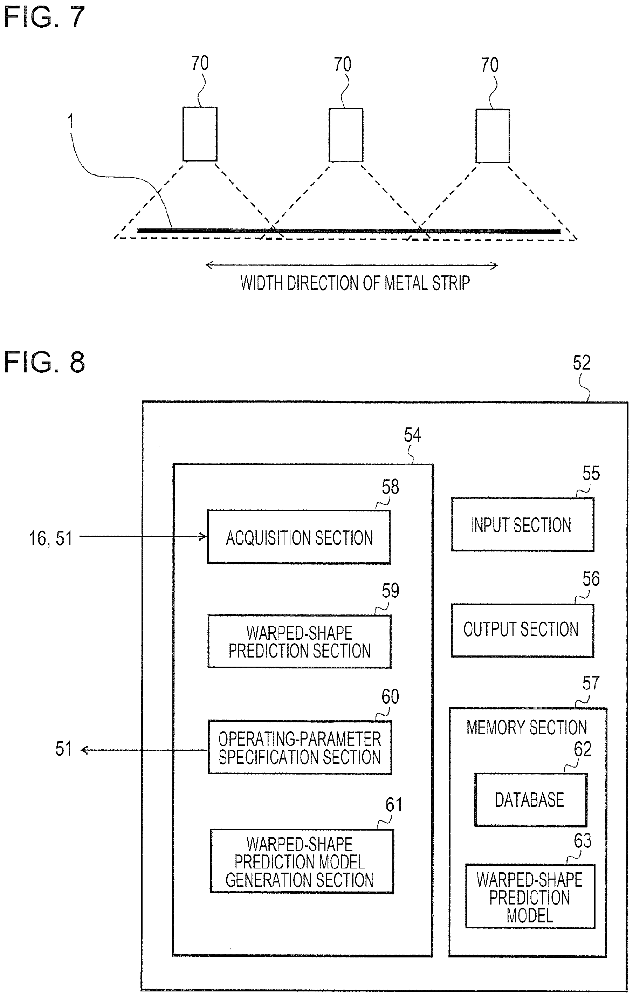

Fig. 7 is a schematic diagram illustrating a state in which the warped shape is measured using multiple laser-scanning-type laser rangefinders. As illustrated in Fig. 7, multiple laser-scanning-type laser rangefinder 70 may be used as the entry-side warped-shape measurement device 16. In this case, the multiple laser-scanning-type laser rangefinders 70 are arranged in parallel across the metal strip 1 to measure the warp height in the width direction of the metal strip 1. This makes it possible to measure the entry-side warped shape in a shorter time than the device illustrated in Fig. 6.

Additionally, a device that measures the entry-side warped shape using the light section method may be used as the entry-side warped-shape measurement device 16. In the light section method, a laser beam that spreads in a fan shape is emitted toward the width direction from above the metal strip 1, and the reflected light from the metal strip 1 is received. The received reflected light is captured by an image sensor, which in turn performs image processing on the captured image to measure the warp height of the metal strip 1. Devices that measure the entry-side warped shape using the light section method include, for example, the LJ-X8000 series from Keyence and Gocator from LMT Technologies.

The accuracy of measuring the warp height of the metal strip 1 using the entry-side warped-shape measurement device 16 is preferably 1 mm or less, and more preferably 0.5 mm or less. By using the entry-side warped-shape measurement device 16 with a measurement accuracy of 1 mm or less, even if the upper limit of the warp height of the metal strip 1 is set within a range of 5 to 10 mm, the warp height of the metal strip 1 can be controlled within that range.

The entry-side warped-shape measurement device 16 preferably measures the warp height of the metal strip 1 at an interval of 1 m or less in the longitudinal direction of the metal strip 1. The warp-height measurement frequency relative to the metal strip 1 which is continuously conveyed is preferably 10 Hz or higher, and more preferably 20 Hz or higher. For example, the metal strip 1 may be conveyed at a speed of 600 m/min or higher by the exit-side facility 24 in the continuous annealing facility 100. Even when the metal strip 1 is conveyed at this line speed, if the warped-shape measurement frequency is 10 Hz or higher, the warped shape can be measured at an interval of 1 m or less in the longitudinal direction of the metal strip 1. Although the above is the description of the entry-side warped-shape measurement device 16, this description is applicable to the pre-cooling warped-shape measurement device 17 and the exit-side warped-shape measurement device 18.

Next, the warped-shape control device 52 will be described. Fig. 8 is a schematic diagram illustrating an example of the configuration of the warped-shape control device 52. The warped-shape control device 52 includes a control section 54, an input section 55, an output section 56, and a memory section 57. The control section 54, which is a CPU or the like, executes a program read from the memory section 57, thereby causing the control section 54 to function as an acquisition section 58, a warped-shape prediction section 59, an operating-parameter specification section 60, and a warped-shape prediction model generation section 61. The memory section 57 includes updatable flash memory, a built-in hard disk or a hard disk connected by a data communication terminal, and an information recording medium such as a memory card, as well as their reading and writing devices. A program for the control section 54 to execute each function, and data used by the program are stored in the memory section 57.

The memory section 57 further stores a database 62 and a warped-shape prediction model 63. The database 62 stores datasets, each of which includes a set of the measured values of the entry-side warped shape and exit-side warped shape of the metal strip 1 manufactured in the past by the temper rolling system 13, along with at least one of operating parameters of the temper rolling mill 40. These measured values and operating parameter(s) are collected and stored in the control computer 50, and are acquired from the control computer 50 through the control controller 51. The warped-shape prediction model 63 is created in advance by the warped-shape prediction model generation section 61 and stored in the memory section 57.

In the metal-strip warped-shape prediction method and warped-shape control method according to the present embodiment, the warped-shape prediction model 63 is a trained machine learning model that receives input data including the entry-side warped shape and at least one of operating parameters of the temper rolling mill 40, and outputs the exit-side warped shape. In the case where the entry-side warped shape is the distribution of the warp height in the width direction of the metal strip 1, input data supplied to the learning model includes the warp height value at each position in the width direction, along with at least one of the operating parameters of the temper rolling mill 40. Additionally, in the case where the entry-side warped shape is a function that approximates the distribution of the warp height in the width direction of the metal strip 1, input data supplied to the learning model includes coefficients that specify the function, along with at least one of the operating parameters of the temper rolling mill 40.

In addition, in the case where the entry-side warped shape is the distribution of curvature specified from a curve representing the relationship between the position and warp height in the width direction of the metal strip 1, input data supplied to the learning model includes the curvature value at each position in the width direction, along with at least one of the operating parameters of the temper rolling mill 40. Furthermore, in the case where the entry-side warped shape is the relationship between the interval of unevenness and spectral intensity, input data supplied to the learning model includes the spectral intensity corresponding to the interval of unevenness, along with at least one of the operating parameters of the temper rolling mill 40.

Additionally, when outputting the distribution of the warp height in the width direction of the metal strip 1 as the exit-side warped shape, a warped-shape prediction model that outputs the warp height at each position in the width direction is created. Similarly, when outputting a function that approximates the warp height as the exit-side warped shape, a warped-shape prediction model that outputs the coefficients of the function is created in advance. Also, when outputting the distribution of curvature as the exit-side warped shape, a warped-shape prediction model that outputs the curvature is created in advance. Furthermore, when outputting the spectral intensity corresponding to each interval of unevenness as the exit-side warped shape, a warped-shape prediction model that outputs the spectral intensity corresponding to each interval of unevenness is created.

Next, processes executed by the acquisition section 58, warped-shape prediction section 59, operating-parameter specification section 60, and warped-shape prediction model generation section 61 will be described. The acquisition section 58 acquires the entry-side warped shape of the metal strip 1 from the entry-side warped-shape measurement device 16. The acquisition section 58 also acquires at least one of the operating parameters of the temper rolling mill 40 from the control computer 50 through the control controller 51. At this time, the acquisition section 58 acquires at least one of the operating parameters set for the temper rolling mill 40 at a timing when the position where the entry-side warped shape is measured by the entry-side warped-shape measurement device 16 reaches the temper rolling mill 40. The acquisition section 58 outputs the entry-side warped shape and at least one of the operating parameters of the temper rolling mill 40 to the warped-shape prediction section 59.

Upon acquiring the entry-side warped shape and at least one of the operating parameters of the temper rolling mill 40, the warped-shape prediction section 59 reads the warped-shape prediction model 63 from the memory section 57, inputs the entry-side warped shape and at least one of the operating parameters of the temper rolling mill 40 to this warped-shape prediction model 63, and causes the warped-shape prediction model to output an exit-side warped shape. In this manner, the warped-shape prediction section 59 predicts the exit-side warped shape.

Here, the operating parameter of the temper rolling mill 40 acquired by the acquisition section 58 will be described. The operating parameter of the temper rolling mill 40 used for predicting the exit-side warped shape is a setting value for the operating condition that affects the warped shape of the metal strip 1, among the operating conditions of the temper rolling mill 40.

As for the operating parameters of the temper rolling mill 40 mentioned above, it is acceptable to use the elongation percentage (extension percentage), the rolling load, and the roll gap between the work rolls 41a and 41b when temper-rolling the metal strip 1. Additionally, the tension (entry-side tension) applied to the metal strip 1 between the entry-side bridle rolls 46 and the temper rolling mill 40 and the tension (exit-side tension) applied to the metal strip 1 between the exit-side bridle rolls 49 and the temper rolling mill 40 may be used. The reason is that these tensions affect the degree of plastic deformation imparted to the metal strip 1 by the rolling from the work rolls 41a and 41b, and the warped shape changes according to the degree of plastic deformation imparted to the metal strip 1.

Furthermore, the bending force of a work roll bender, which is a shape control actuator of the temper rolling mill 40, may also be used as the operating parameter of the temper rolling mill 40. The work roll bender of the temper rolling mill 40 is a shape control actuator that applies a bending force to the work rolls 41a and 41b to adjust the deflection of the work rolls 41a and 41b. By adjusting the bending force of the work roll bender, the deflection of the work rolls 41a and 41b is adjusted, forming the distribution of rolling reduction ratio or elongation percentage in the width direction of the metal strip 1. By performing temper rolling with the work rolls 41a and 41b, where a distribution of the rolling reduction ratio or elongation percentage has been formed, the warped shape in the width direction of the metal strip 1 can be controlled.

The warped-shape prediction section 59 outputs the predicted exit-side warped shape to the operating-parameter specification section 60. The operating-parameter specification section 60 first determines whether the predicted exit-side warped shape is less than or equal to a preset target value (warp target value). The target value may be acquired from the control computer 50 through the acquisition section 58 and the control controller 51, or may be entered by the operator using the input section 55. Furthermore, the target value may be stored in advance in the memory section 57, and the target value may be read from the memory section 57. In the case where the exit-side warped shape predicted by the warped-shape prediction section 59 is determined to exceed the target value, the operating-parameter specification section 60 specifies the operating parameter of the cooling equipment 30 that can reduce the exit-side warped shape of the metal strip 1.

The operating parameter of the cooling equipment 30 specified by the operating-parameter specification section 60 is preferably the operating parameter that has a large impact on changes in the warped shape of the metal strip 1 due to cooling. As such an operating parameter of the cooling equipment 30, any one of the push-in amount of the hold-down rolls 33 of the cooling equipment 30, the offset amount between the hold-down rolls 33, and the shift amount of the hold-down rolls 33 may be used.

For example, in the case of using the push-in amount of the hold-down rolls 33, reducing the push-in amount (closing the hold-down rolls) can reduce the warping of the metal strip 1 caused by thermal contraction and strain due to phase transformation that occurs on the metal strip 1 during cooling. This can reduce the exit-side warped shape of the metal strip 1.

Additionally, in the case of using the offset amount between the hold-down rolls 33, reducing the offset amount can increase the action of constraining the deformation of the metal strip 1 during cooling, thereby reducing the warping of the metal strip 1. This can reduce the exit-side warped shape of the metal strip 1.

Furthermore, in the case of using the shift amount of the hold-down rolls 33, changing the shift amount varies the distance between the surface of the metal strip 1 and the liquid injection nozzles, creating a difference in cooling intensity between the front and back of the metal strip 1, thereby altering the warped shape. By controlling the changes in the warped shape to reduce the warping, the exit-side warped shape of the metal strip 1 can be reduced.

Note that it is acceptable to use the amount of water injected from the liquid injection nozzles as the operating parameter of the cooling equipment 30. By creating a difference in the amount of water between the front and back of the metal strip 1, the warped shape can also be altered. However, controlling the amount of water injected from the liquid injection nozzles is not necessarily highly responsive; thus, it is preferable to use the shift amount of the hold-down rolls 33 as the operating parameter of the cooling equipment 30.

The operating-parameter specification section 60 outputs the specified operating parameter of the cooling equipment 30 to the control controller 51. The control controller 51 changes the operating condition of the cooling equipment 30 based on the operating parameter acquired from the operating-parameter specification section 60. Note that the operating-parameter specification section 60 may display the specified operating parameter of the cooling equipment 30 on the output section 56, and, using the operating parameter, prompt the operator to change the operating condition of the cooling equipment 30.

In this way, the exit-side warped shape of the metal strip 1 is predicted immediately after the metal strip 1 passes through the temper rolling mill 40, and the operating condition of the cooling equipment 30 is controlled so that the predicted exit-side warped shape becomes less than or equal to a target value. By controlling the cooling equipment 30 in this way, the control can be more rapidly conducted than when actually measuring the exit-side warped shape at the inspection table 14 disposed within the downstream part of the continuous annealing facility 100 and, based on the exit-side warped shape, controlling the operating condition of the cooling equipment 30. If a defective portion occurs in the exit-side warped shape of the metal strip 1, the defective portion can be reduced.

Such control is preferably implemented over the entire length from the leading end portion to the trailing end portion of the metal strip 1. As a result, the exit-side warped shape of the metal strip 1 can be controlled to remain below or equal to the target value over its entire length, achieving the manufacture of the metal strip 1 with excellent warped shape characteristics. In the continuous annealing facility 100, which includes heating equipment and cooling equipment, the metal strip 1 is quenched, which may often lead to a deterioration of the warped shape of the metal strip **1.** In particular, the metal strip 1 where the tensile strength is 980 MPa or higher tends to have a deteriorated warped shape due to quenching. Thus, by applying the metal-strip warped-shape control method according to the present embodiment, it is possible to suppress yield loss due to warped shape defects while achieving the manufacture of the metal strip 1 with excellent warped shape characteristics.

Additionally, in the metal-strip warped-shape control method according to the present embodiment, the operating parameter of the cooling equipment 30 is specified and set because, in the continuous annealing facility 100, it is the cooling step of the cooling equipment 30 that causes a significant change in the warped shape of the metal strip 1. In contrast, it is also conceivable to control the operating condition of the temper rolling mill 40 to control the exit-side warped shape. However, since the temper rolling mill 40 has not only the shape correction function for the metal strip 1 but also the function to adjust the mechanical properties of the metal strip 1, the extent to which the elongation percentage of the metal strip 1 can be changed is limited in the temper rolling mill 40. Therefore, the range where the operating condition can be modified to correct the exit-side warped shape is limited, and it may not always be possible to achieve the operating condition that keeps the warp height less than or equal to the target value. Thus, in the metal-strip warped-shape control method according to the present embodiment, the operating parameter of the cooling equipment 30 that can reduce the exit-side warped shape is specified and set.

Next, the method for generating the warped-shape prediction model 63 by the warped-shape prediction model generation section 61 will be described. In order to generate the warped-shape prediction model 63, the measured data of the entry-side warped shape and exit-side warped shape is acquired using the entry-side warped-shape measurement device 16, which measures the entry-side warped shape of the metal strip 1 upstream of the temper rolling mill 40, and the exit-side warped-shape measurement device 18, which measures the exit-side warped shape of the metal strip 1 downstream of the temper rolling mill 40.

The control computer 50 generates tracking information for the weld of the metal strip 1. Using information regarding the line speed of the metal strip 1 and the tracking information, the control computer 50 acquires the entry-side warped shape and the exit-side warped shape in association with the distance from the leading-end weld of the metal strip 1, and stores them. At that time, since elongation is imparted to the metal strip 1 in the temper rolling mill 40, it is preferable that the control computer 50 correct the distance from the leading-end weld, measured by the exit-side warped-shape measurement device 18, according to the elongation percentage of the temper rolling mill 40. Furthermore, the control computer 50 acquires the operating parameters of the temper rolling mill 40 in association with the distance from the leading-end weld of the metal strip 1, and stores them.

The acquisition section 58 acquires datasets from the control computer 50 through the control controller 51. Each dataset includes a set of the measured values of the entry-side warped shape and exit-side warped shape at positions where the distances from the leading-end weld of the metal strip 1 are the same, along with at least one of the operating parameters of the temper rolling mill 40 when these positions pass through the temper rolling mill 40. The acquisition section 58 stores the acquired datasets in the database 62 in the memory section 57. The database 62 preferably stores 200 or more datasets, and more preferably stores 1000 or more datasets.

Additionally, the acquisition section 58 preferably acquires the above-mentioned datasets from the leading end portion (such as within 20 m from the leading-end weld), the steady-state portion, and the trailing end portion (such as within 20 m from the trailing-end weld) of the metal strip 1. In metal products, whether a product can be shipped is conventionally determined by inspections conducted on the leading end portion, the steady-state portion, and the trailing end portion. Therefore, it is preferably to acquire datasets for the leading end portion, the steady-state portion, and the trailing end portion in order to cope with the inspections.

Furthermore, the acquisition section 58 preferably acquires datasets over the entire length of the metal strip 1 at a predetermined interval, from the leading end portion to the trailing end portion of the metal strip 1. The interval at which the datasets are acquired is preferably set within a range from 5 m to 20 m inclusive. In this way, by storing the datasets over the entire length of the metal strip 1 in the database 62 and creating a warped-shape prediction model using these datasets, the warped-shape prediction model is a warped-shape prediction model that allows for highly accurate prediction of the exit-side warped shape. Additionally, the acquisition section 58 may update the datasets stored in the database 62 as needed, with the total number of datasets limited to a certain maximum.

Using the datasets stored in the database 62, the warped-shape prediction model generation section 61 generates the warped-shape prediction model 63, which receives input data including the entry-side warped shape and at least one of the operating parameters of the temper rolling mill 40, and which outputs the exit-side warped shape. When the warped-shape prediction model 63 is a trained machine learning model, the warped-shape prediction model generation section 61 trains the machine learning model using the datasets stored in the database 62 as training data, thereby generating the trained machine learning model. As for the machine learning model, commonly employed methods such as neural networks (including deep learning and convolutional neural networks), decision tree learning, random forests, or support vector regression may be used. It is also acceptable to use an ensemble model combining multiple models.

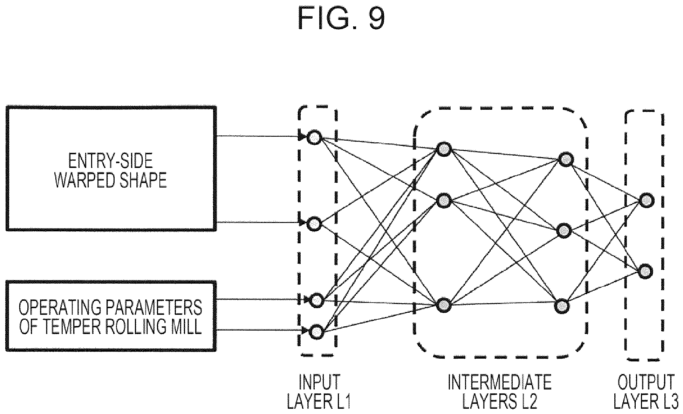

Fig. 9 is a diagram illustrating an example of a machine learning model using a neural network. The warped-shape prediction model 63 can be generated using a machine learning model that employs a general neural network as illustrated in Fig. 9, for example. L1, L2, and L3 in Fig. 9 indicate the input layer, intermediate layers, and output layer, respectively. Particularly, by using deep learning with a multi-layer neural network, other operating parameters that are correlated with the warped shape of the metal strip 1 can be freely selected as input without considering the problem of multicollinearity, thereby improving the accuracy of predicting the exit-side warped shape of the metal strip 1. As illustrated in Fig. 9, as a neural network, a neural network with two to three intermediate layers and 18 to 512 nodes each can be used, with a sigmoid function used as the activation function. The number of nodes in the output layer simply needs to be set to match the number of numerical values output by the warped-shape prediction model. For example, in the case where the warped-shape prediction model outputs the warp height at each position in the width direction, then the number of nodes in the output layer simply needs to correspond to the number of positions in the width direction at which the warp heights are specified. Alternatively, in the case where the warped-shape prediction model outputs a function that approximates the warp height, then the number of nodes in the output layer simply needs to correspond to the number of coefficients for defining that function.

In addition, the warped-shape prediction model generation section 61 may perform machine learning using the datasets stored in the database 62, which are divided into training data and test data. By dividing the datasets into training data and test data in this way, the warped-shape prediction model generation section 61 can conduct the learning of the weight coefficients of the neural network using the training data, as well as generating the warped-shape prediction model by modifying the structure of the neural network (the number of intermediate layers and nodes) to achieve a high accuracy rate for the exit-side warped shape using the test data. By generating the warped-shape prediction model 63 in this way, the accuracy of the warped-shape prediction model 63 in estimating the exit-side warped shape can be improved.

Furthermore, the weight coefficients of the warped-shape prediction model 63 may be updated. To update the weight coefficients, the propagation method may be used. Additionally, the warped-shape prediction model 63 may be updated to a new warped-shape prediction model by conducting the machine learning every sixth months or every year, for example. By updating the warped-shape prediction model using datasets including the latest data, even if the state of the temper rolling mill 40 changes over time, the latest state can be reflected in the warped-shape prediction model.

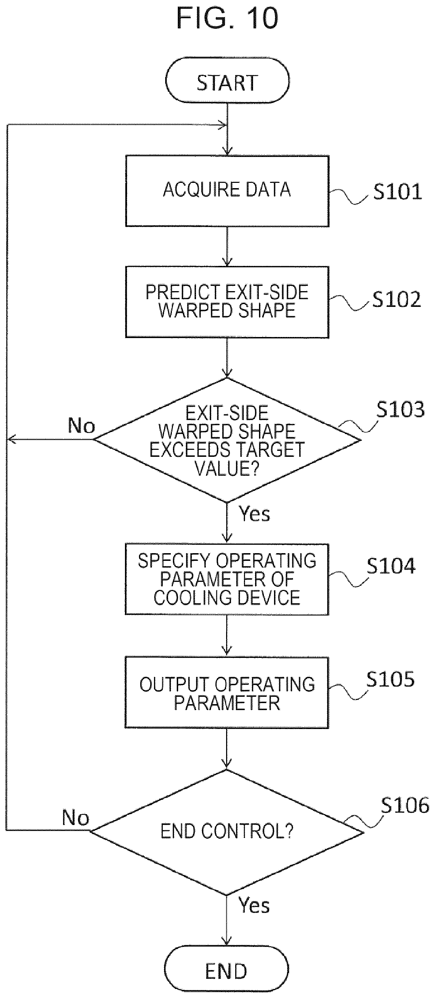

Fig. 10 is a flowchart illustrating the flow of a metal-strip warped-shape control method according to the present embodiment. Using Fig 10, the flow of the metal-strip warped-shape control method according to the present embodiment will be described. The flow of the metal-strip warped-shape control method according to the present embodiment begins, for example, under the condition that the continuous annealing facility 100, the control computer 50, the control controller 51, and the warped-shape control device 52 have been activated.

First, the acquisition section 58 acquires the entry-side warped shape from the entry-side warped-shape measurement device 16. The acquisition section 58 further acquires at least one of the operating conditions set to the temper rolling mill 40 from the control controller 51 at the timing when the position where the entry-side warped shape was measured reaches the temper rolling mill 40 (step S101). The acquisition section 58 outputs the acquired entry-side warped shape and at least one of the operating conditions of the temper rolling mill 40 to the warped-shape prediction section 59.

The warped-shape prediction section 59 reads the warped-shape prediction model 63 from the memory section 57, inputs the entry-side warped shape and at least one of the operating conditions of the temper rolling mill 40 to this warped-shape prediction model 63, and causes the warped-shape prediction model 63 to output an exit-side warped shape, thereby predicting the exit-side warped shape (step S102). The warped-shape prediction section 59 outputs the predicted exit-side warped shape to the operating-parameter specification section 60.

Upon acquiring the exit-side warped shape, the operating-parameter specification section 60 determines whether the exit-side warped shape exceeds a target value (step S103). In the case where the exit-side warped shape is determined to exceed the target value (step S103: Yes), the operating-parameter specification section 60 specifies the operating parameter of the cooling equipment 30 that can reduce the exit-side warped shape (step S104). In contrast, in the case where the exit-side warped shape is determined to be less than or equal to the target value (step S103: No), the operating-parameter specification section 60 returns the process to step S101, and repeatedly executes the process from step S101.

Upon specifying the operating parameter of the cooling equipment 30 that can reduce the exit-side warped shape, the operating-parameter specification section 60 outputs the operating parameter to the control controller 51, which in turn changes the operating condition of the cooling equipment 30. After outputting the operating parameter, the operating-parameter specification section 60 determines whether a command to end the control has been input from the control controller 51 or from the operator using the input section 55 (step S106). In the case where it is determined that a command to end the control has been input (step S106: Yes), the operating-parameter specification section 60 ends the process of the metal-strip warped-shape control method. In contrast, in the case where it is determined that a command to end the control has not been input, the operating-parameter specification section 60 returns the process to step S101, and repeatedly executes the process from step S101. It is then again determined in step S103 whether the exit-shape warped shape predicted using the entry-side warped shape after changing the operating parameter of the cooling equipment 30 exceeds the target value. By repeatedly executing the process, the steel strip 1 with the exit-side warped shape being less than or equal to the target value can be manufactured.

By implementing the metal-strip warped-shape control method according to the present embodiment as mentioned above, at the timing when the metal strip 1 reaches the temper rolling mill 40, the exit-side warped shape can be rapidly predicted based on the entry-side warped shape of the metal strip 1. By specifying the operating parameter of the cooling equipment 30 so that the predicted exit-side warped shape is reduced, this operating parameter can be set to an operating condition of the cooling equipment 30, thereby achieving the manufacture of the metal strip 1 with a reduced warp height in the width direction.

<Other embodiments>

Next, other embodiments of the metal-strip prediction method according to the present embodiment will be described. As for the warped-shape prediction method according to the present embodiment, an example in which the warped-shape prediction section 59 predicts the exit-side warped shape using a trained machine learning model that receives input data including the entry-side warped shape and at least one of the operating parameters of the temper rolling mill 40, and that outputs the exit-side warped shape has been discussed; however, the warped-shape prediction method is not limited to this. For example, in the case of using the average value, maximum value, or standard deviation of the warp height in the width direction of the metal strip 1 as the entry-side warped shape and the exit-side warped shape, the warped-shape prediction section 59 may predict the exit-side warped shape using a function expression that uses the entry-side warped shape and at least one of the operating parameters of the temper rolling mill 40. In this case, the warped-shape prediction section 59 predicts the exit-side warped shape using function f indicated in Equation (1) below.

$$HO = f(HI, g) \ ... \ (1)$$

In Equation (1) mentioned above, HO is the exit-side warp height (mm), HI is the entry-side warp height (mm), and g is an operating parameter of the temper rolling mill 40.

The operating parameter g of the temper rolling mill 40 is a setting value for the operating condition that affects the warped shape of the metal strip 1, among the operating conditions of the temper rolling mill 40. For example, one or more parameters can be used, such as the elongation percentage imparted to the metal strip 1 by the temper rolling mill 40, and scalar quantities like the bending force of the work roll bender. Typically, as the elongation percentage increases, the exit-side warp height HO tends to decrease. Moreover, when the entry-side warp height HI is larger, there is a tendency that it is more difficult for the exit-side warp height HO to decrease even when the same elongation percentage is imparted. Therefore, function f can be applied, represented as a linear or quadratic equation in terms of HI and g. Function f is generated through multiple regression analysis using the datasets stored in the database 62, and is stored in advance in the memory section 57.

Additionally, in the case where the pre-cooling warped-shape measurement device 17 is provided between the heating zone 6 and the cooling zone 8 in the continuous annealing facility 100, the warped-shape prediction section 59 may predict the exit-side warped shape using a trained machine learning model that receives input data including the pre-cooling warped shape, the entry-side warped shape, and at least one of the operating parameters of the temper rolling mill 40, and that outputs the exit-side warped shape. In this case, multiple datasets are stored in the database 62, each dataset including a set of the measured values of the pre-cooling warped shape and the entry-side warped shape, at least one of the operating parameters of the temper rolling mill 40, and the measured value of the exit-side warped shape. The warped-shape prediction model generation section 61 generates, as the warped-shape prediction model 63, a trained machine learning model that has been machine-learned using the datasets as training data.

If the pre-cooling warp height of the metal strip 1 is high, the warped shape formed in the metal strip 1 due to cooling in the cooling zone 8 will also increase. Consequently, the exit-side warped shape downstream of the temper rolling mill 40 will increase as well. As noted, there is a correlation between the pre-cooling warped shape and the exit-side warped shape of the metal strip 1. By including the pre-cooling warped shape in the input data, the accuracy of predicting the exit-side warped shape using the trained machine learning model can be improved.

Furthermore, also in the case where the pre-cooling warped-shape measurement device 17 is provided between the heating zone 6 and the cooling zone 8 in the continuous annealing facility 100, when using the average value, maximum value, or standard deviation of the warp height in the width direction of the metal strip 1 as the entry-side warped shape and the exit-side warped shape, it is acceptable to predict the exit-side warped shape using a function expression that employs the pre-cooling warped shape, the entry-side warped shape, and the operating parameter of the temper rolling mill 40. In this case, the warped-shape prediction section 59 predicts the exit-side warped shape using function f2 indicated in Equation (2) below.

$$HO = f2(HI, HC, g) \ldots (2)$$

In Equation (2) mentioned above, HO is the exit-side warp height (mm), HI is the entry-side warp height (mm), HC is the pre-cooling warp height (mm), and g is an operating parameter of the temper rolling mill 40. Like function f, function f2 is generated through multiple regression analysis using the datasets stored in the database 62, and is stored in advance in the memory section 57.

By using such other embodiments of the metal-strip warped-shape prediction method, at the timing when the metal strip 1 reaches the temper rolling mill 40, the exit-side warped shape downstream of the temper rolling mill 40 can be rapidly predicted. By specifying the operating parameter of the cooling equipment 30 so that the predicted exit-side warped shape is reduced, this operating parameter can be set to an operating condition of the cooling equipment 30, thereby achieving the manufacture of the metal strip 1 with a reduced warp height in the width direction.

Note that, in the example illustrated in Fig. 1, the example where the control computer 50, the control controller 51, and the warped-shape control device 52 are separate devices has been discussed; however, this is not the only possible example. The control computer 50 and the control controller 51 may be a single device, or the control controller 51 and the warped-shape control device 52 may be a single device. Furthermore, the control computer 50, the control controller 51, and the warped-shape control device 52 may be a single device.

EXAMPLE 1

As an example of the present invention, Example 1 in which the exit-side warped shape of a metal strip was predicted using the continuous annealing facility 100 illustrated in Fig. 1 will be described. The metal strip used in Example 1 is a high-strength steel sheet with a tensile strength TS specification of 980 MPa, a thickness of 1.4 mm, and a width of 1007 mm.

The continuous annealing facility 100 has heating equipment that heats the metal strip in the heating zone 6, and the cooling equipment 30 performing water cooling (water quenching) in the cooling zone 8. The metal strip is heated by the heating equipment, cooled by the cooling equipment 30 to a temperature below the martensite start temperature (Ms), and conveyed to the exit-side facility 24. The temper rolling mill 40 was disposed in the exit-side facility 24, with the entry-side warped-shape measurement device 16 disposed in the exit portion of the final cooling zone 11, and the exit-side warped-shape measurement device 18 disposed on the inspection table 14.

The diameter of the work rolls of the temper rolling mill 40 was 470 mm, and the surface roughness of the work rolls was Ra 5.4 $\mu$m. The entry-side tension and the exit-side tension of the temper rolling mill 40 were set to 70 kN, and the roll gap was varied to change the elongation percentage of temper rolling within a range of 0.1 to 0.2%.

In Example 1, the measured data of the entry-side warped shape measured by the entry-side warped-shape measurement device 16, the measured data of the exit-side warped shape measured by the exit-side warped-shape measurement device 18, and the actual operating data of the temper rolling mill 40 were acquired as information at the same position in the longitudinal direction of the metal strip, and datasets, each of which includes a set of these items of data, were stored in the database 62. For a single metal strip, the datasets stored in the database 62 consisted of 50 to 200 sets detected at the respective positions in the longitudinal direction. Then, by the time the datasets for 20 metal strips were stored in the database 62, the warped-shape prediction model generation section 61 generated a warped-shape prediction model. At that time, the warped-shape prediction model generation section 61 divided 3000 datasets stored in the database 62 into 2100 datasets as training data for a machine learning model, and the remaining 900 datasets as test data, and evaluated the accuracy of predicting the exit-side warped shape.

The actual operating data of the temper rolling mill 40 used as input for the warped-shape prediction model included the elongation percentage imparted to the metal strip by the temper rolling mill 40, and the actual values of the work roll bender. For the measured data of the entry-side warped shape input to the warped-shape prediction model, two items were selected: the maximum value of the warp height and the average value of the warp height of the entry-side warped shape in the width direction. Additionally, for the actual data of the exit-side warped shape, which was the output of the warped-shape prediction model, two items were selected: the maximum value of the warp height and the average value of the warp height of the exit-side warped shape in the width direction.

In Example 1, the neural network illustrated in Fig. 9 was used as the warped-shape prediction model. As for the neural network, a neural network with three intermediate layers and 256 nodes each was used, with a sigmoid function used as the activation function.

For the warped-shape prediction model generated in this way, the prediction accuracy of the maximum value and average value of the warp height of the exit-side warped shape in the width direction predicted by the warped-shape prediction model were verified using 900 items of test data accumulated in the database. As a result, the error average between the maximum value of the exit-side warped shape output from the warped-shape prediction model and the maximum measured value of the corresponding exit-side warped shape for the test data was 0.5 mm, with a standard deviation of 0.4 mm. Additionally, the error average between the predicted value of the average height of the exit-side warped shape and the corresponding measured value was 0.3 mm, with a standard deviation of 0.2 mm. Based on these results, it was confirmed that the exit-side warped shape was accurately predicted using the warped-shape prediction model.

EXAMPLE 2

Next, a second example where the exit-side warped shape of a metal strip was controlled using the continuous annealing facility 100 illustrated in Fig. 1 will be described. The metal strip used in the present example is a high-strength steel sheet with a tensile strength TS specification of 1310 MPa, a thickness of 1.4 mm, and a width of 1000 mm.

The cooling start temperature for cooling the metal strip in the cooling equipment 30 was 740°C, and the cooling end temperature was 30°C. The amount of cooling fluid injected from the coolant jet injection device 32 was 1000 m$^3$/hr, and the water temperature of the cooling fluid was 30°C. The line speed of the metal strip passing through the cooling equipment 30 was 50 to 80 m/min. The coolant jet injection device 32 had the pair of hold-down rolls 33 for suppressing the deformation of the metal strip and preventing the deterioration of the shape of the metal strip. The roll diameter of the hold-down rolls 33 was 150 mm, and the offset amount between the hold-down rolls 33 was 80 mm.

The diameter of the work rolls 41a and 41b of the temper rolling mill 40 was 470 mm, and the surface roughness of the work rolls 41a and 41b was Ra 5.4 $\mu$m. The entry-side tension and the exit-side tension of the temper rolling mill 40 were set to 70 kN, and the roll gap was varied to change the elongation percentage of temper rolling within a range of 0.1 to 0.2%.

For the entry-side warped-shape measurement device 16 and the exit-side warped-shape measurement device 18, two LJ-X8900 machines from Keyence were arranged in parallel in the width direction of the metal strip as a means for measuring the warp height using the light section method, measuring the warped shape of the metal strip at an interval of 5 m in the longitudinal direction.

In Example 2, first, the acquisition section 58 acquired datasets, each of which includes a set of the measured data of the entry-side warped shape measured by the entry-side warped-shape measurement device 16, the measured data of the exit-side warped shape measured by the exit-side warped-shape measurement device 18, and the operating parameters of the temper rolling mill 40. Datasets were acquired, each of which includes a set of the measured data where the distances from the weld are the same in the longitudinal direction of the metal strip, and the datasets were stored in the database 62. Datasets for 20 metal strips were stored in the database 62. For the entry-side warped shape and the exit-side warped shape included in the datasets, the maximum value of the warp height in the width direction of the metal strip was used. Additionally, as the operating parameters of the temper rolling mill 40, the elongation percentage imparted to the metal strip by the temper rolling mill 40 and the setting value for the bending force of the work roll bender were used.

In Example 2, using the datasets stored in the database 62, the exit-side warp height HO was approximated with function f taking the entry-side warp height HI and the operating parameter g of temper rolling as input. Function f was expressed as a linear combination of the variables HI, g1 (elongation percentage), and g2 (bending force of the work roll bender), with each coefficient calculated using the least squares method. Using function f calculated in this way, the exit-side warped shape was predicted. This example was regarded as Invention Examples 1 and 2.

In addition, a warped-shape prediction model that was machine-learned using the datasets stored in the database 62 as training data was generated, and the exit-side warped shape was predicted using the warped-shape prediction model. This example was regarded as Invention Examples 3 to 5. As for the warped-shape prediction model in Invention Examples 3 to 5, the neural network illustrated in Fig. 9 was used. As for the neural network, a neural network with three intermediate layers and 256 nodes each was used, with a sigmoid function used as the activation function.

Furthermore, in Example 2, the exit-side warped shape of a newly manufactured metal strip was predicted using the above-mentioned warped-shape prediction model and warped-shape prediction section 59. The operating-parameter specification section 60 compared the target value (warp target value) of the exit-side warped shape with the exit-side warped shape predicted by the warped-shape prediction section 59. With the warp target value set to 6 mm, the operating-parameter specification section 60 determined to be acceptable when the warp height of the exit-side warped shape, output from the warped-shape prediction model, was 6 mm or less, and determined to be unacceptable when the warp height of the exit-side warped shape exceeded 6 mm. In the case where the operating-parameter specification section 60 determined the exit-side warped shape as unacceptable, the operating-parameter specification section 60 specified the operating parameter of the cooling equipment 30 that can reduce the warp height. By outputting this operating parameter to the control controller 51, the operating-parameter specification section 60 changed the operating condition of the cooling equipment 30. In this manner, the operating parameter specified by the operating-parameter specification section 60 was reflected in the operating condition of the cooling equipment 30.

In Invention Examples 1 and 3, the push-in amount of the hold-down rolls 33 was used as the operating parameter of the cooling equipment 30. In Invention Examples 2 and 4, the shift amount of the hold-down rolls 33 was used as the operating parameter of the cooling equipment 30. In Invention Example 5, two parameters, the push-in amount of the hold-down rolls 33 and the shift amount of the hold-down rolls 33, were used as the operating parameters of the cooling equipment 30.

In contrast, Comparative Example 1 is an example in which a metal strip was manufactured with the hold-down rolls 33 opened (with the hold-down rolls separated by 160 mm in the horizontal direction) in the cooling equipment 30, without predicting the exit-side warped shape. Comparative Example 2 is an example in which a metal strip was manufactured using the hold-down rolls 33 in the cooling equipment 30, with a push-in amount of 0 mm for the hold-down rolls to align with the pass line position, without predicting the exit-side warped shape. Even with a push-in amount of 0 mm for the hold-down rolls, the metal strip was still subjected to a pressing force corresponding to its thickness.

In Invention Examples 1 to 5 and Comparative Examples 1 and 2, five metal strips were manufactured. At that time, the control by the operating-parameter specification section 60 and the control controller 51 was conducted at an interval of 10 m in the longitudinal direction of the metal strip during the rolling of the metal strip in the temper rolling mill 40, thereby controlling the exit-side warped shape in the longitudinal direction of the metal strip. The control conditions and the measurement results of the maximum warp height of the metal strip in Invention Examples 1 to 5 and Comparative Examples 1 and 2 of Example 2 are indicated in Table 1.

[Table 1]

| | Whether to predict exit-side warped shape | Whether to apply machine learning model | Whether to use hold-down rolls | Hold-down roll gap [mm] | Hold-down roll shift [mm] | Maximum warp height [mm] |
|---|---|---|---|---|---|---|
| Invention example 1 | Yes | No | Yes | -1 to 4 | - | 5 |
| Invention example 2 | Yes | No | Yes | 0 | -10 to 2 | 6 |
| Invention example 3 | Yes | Yes | Yes | -5 to 6 | - | 3 |
| Invention example 4 | Yes | Yes | Yes | 0 | -14 to -4 | 4 |
| Invention example 5 | Yes | Yes | Yes | -3 to 5 | -12 to 0 | 2 |
| Comparative example 1 | No | No | No | 160 | - | 35 |
| Comparative example 2 | No | No | Yes | 0 | - | 9 |

The maximum warp height indicated in Table 1 represents the maximum warp height in the five metal strips including each position in the longitudinal direction. Note that the values for the "hold-down roll gap" and "hold-down roll shift" in the table represent the range of values set as the operating conditions of the cooling equipment 30. The shift amount of the hold-down rolls 33 is the shift amount of the hold-down rolls from the pass line position, with the back side of the metal strip as - and the front side as +. As indicated in Table 1, in Invention Examples 1 to 5, the maximum warp height of the metal strip was lower than Comparative Examples 1 and 2.

The maximum warp height of the metal strip in Comparative Example 1 was 35 mm, a very large value. Additionally, in Comparative Example 2, since the exit-side warped shape was not predicted as in Invention Examples 1 to 5, the operating parameters of the cooling equipment 30 were fixed at constant values. The maximum warp height of the metal strip in Comparative Example 2 was 9 mm, representing a significant reduction compared to Comparative Example 1. However, Comparative Example 2 was unable to achieve the warp target value (6 mm) in some parts of the metal strip, resulting in portions that were deemed unacceptable. In this way, the exit-side warped shape of the metal strip was quickly predicted using the metal-strip warped-shape prediction method according to the present embodiment. By specifying and setting the operating parameter(s) of the cooling equipment so that the predicted exit-side warped shape became smaller, the exit-side warped shape across the entire length in the longitudinal direction of the metal strip was kept below or equal to the target warp value. It has been confirmed that the warped-shape control method of the present invention is effective for manufacturing high-strength steel sheets.

Reference Signs List

| | |
|---|---|
| 1 | metal strip |
| 2 | payoff reel |
| 3 | welding machine |
| 4 | entry-side looper |
| 5 | preheating zone |
| 6 | heating zone |
| 7 | soaking zone |
| 8 | cooling zone |
| 9 | reheating zone |
| 10 | overaging zone |
| 11 | final cooling zone |
| 12 | exit-side looper |
| 13 | temper rolling system |
| 14 | inspection table |
| 15 | tension reel |
| 16 | entry-side warped-shape measurement device |
| 17 | pre-cooling warped-shape measurement device |
| 18 | exit-side warped-shape measurement device |
| 21 | furnace facility |
| 22 | annealing facility |
| 23 | reheating facility |
| 24 | exit-side facility |
| 30 | cooling equipment |
| 31 | press rolls |
| 32 | coolant jet injection device |
| 33 | hold-down rolls |
| 34 | dipping tank |
| 35 | cooling fluid |
| 36 | deflector roll |
| 37 | deflector roll |
| 38 | wringer rolls |
| 39 | drying furnace |
| 40 | temper rolling mill |
| 41a | and 41b work rolls |
| 42a | and 42b backup rolls |
| 43 | screw-down device |
| 44 | bearing box |
| 45 | load detector |
| 46 | entry-side bridle rolls |
| 47 | entry-side tension meter |
| 48 | exit-side tension meter |
| 49 | exit-side bridle rolls |
| 50 | control computer |
| 51 | control controller |
| 52 | warped-shape control device |
| 54 | control section |
| 55 | input section |
| 56 | output section |

57    memory section
58    acquisition section
59    warped-shape prediction section
60    operating-parameter specification section
61    warped-shape prediction model generation section
62    database
63    warped-shape prediction model
64    water injection nozzles
70    laser rangefinders

**Claims**

1.  In a metal-strip continuous annealing facility including heating equipment that heats a metal strip, cooling equipment that cools the metal strip heated by the heating equipment, a temper rolling mill that corrects a shape of the metal strip cooled by the cooling equipment, and an entry-side warped-shape measurement device that measures an entry-side warped shape, which is a warped shape of the metal strip upstream of the temper rolling mill, between the cooling equipment and the temper rolling mill, a metal-strip warped-shape prediction method for predicting an exit-side warped shape, which is a warped shape of the metal strip downstream of the temper rolling mill, comprising:
    predicting the exit-side warped shape based on the entry-side warped shape and at least one of operating parameters of the temper rolling mill.

2.  The metal-strip warped-shape prediction method according to Claim 1, wherein the exit-side warped shape is predicted using a warped-shape prediction model that receives input data including the entry-side warped shape and at least one of the operating parameters of the temper rolling mill, and outputs the exit-side warped shape.

3.  The metal-strip warped-shape prediction method according to Claim 1, wherein:

    the continuous annealing facility further includes a pre-cooling warped-shape measurement device provided upstream of the cooling equipment; and
    the exit-side warped shape is predicted based on a pre-cooling warped shape measured by the pre-cooling warped-shape measurement device, the entry-side warped shape measured by the entry-side warped-shape measurement device, and at least one of the operating parameters of the temper rolling mill.

4.  The metal-strip warped-shape prediction method according to Claim 3, wherein the exit-side warped shape is predicted using a warped-shape prediction model that receives input data including the pre-cooling warped shape, the entry-side warped shape, and at least one of the operating parameters of the temper rolling mill, and outputs the exit-side warped shape.

5.  A metal-strip warped-shape control method comprising:
    in a case where the exit-side warped shape predicted by the metal-strip warped-shape prediction method according to any one of Claims 1 to 4 exceeds a target value, setting an operating parameter of the cooling equipment so that the exit-side warped shape is reduced.

6.  The metal-strip warped-shape control method according to Claim 5, wherein:

    the cooling equipment includes a coolant jet injection device with a plurality of nozzles that inject cooling fluid onto both sides of the metal strip, and at least one pair of hold-down rolls that constrain the metal strip; and
    the operating parameter of the cooling equipment is at least one of a push-in amount of the pair of hold-down rolls onto the metal strip, an offset amount between the pair of hold-down rolls, and a shift amount of the pair of hold-down rolls.

7.  A metal-strip manufacturing method for manufacturing a metal strip with a tensile strength of 980 MPa or higher using the metal-strip warped-shape control method according to Claim 5 or Claim 6.

8.  In a metal-strip continuous annealing facility including heating equipment that heats a metal strip, cooling equipment that cools the metal strip heated by the heating equipment, a temper rolling mill that corrects a shape of the metal strip cooled by the cooling equipment, an entry-side warped-shape measurement device that measures an entry-side warped shape, which is a warped shape of the metal strip upstream of the temper rolling mill, between the cooling equipment and the temper rolling mill, and an exit-side warped-shape measurement device that measures an exit-side warped shape, which is a warped shape of the metal strip downstream of the temper rolling mill, downstream of the temper rolling mill, a warped-shape prediction model generation method for generating a warped-shape prediction model that predicts an exit-side warped shape, which is a warped shape of the metal strip downstream of the temper rolling mill, comprising:

acquiring a plurality of datasets, each of which includes a set of the entry-side warped shape measured by the entry-side warped-shape measurement device, at least one of operating parameters of the temper rolling mill, and the exit-side warped shape measured by the exit-side warped-shape measurement device, and generating a warped-shape prediction model that receives input data including the entry-side warped shape and at least one of the operating parameters of the temper rolling mill, and outputs the exit-side warped shape through machine learning using the acquired datasets as training data.

9. The warped-shape prediction model generation method according to Claim 8, wherein:

the continuous annealing facility further includes a pre-cooling warped-shape measurement device provided upstream of the cooling equipment; and
the method comprises acquiring a plurality of datasets, each of which includes a set of a pre-cooling warped shape measured by the pre-cooling warped-shape measurement device, the entry-side warped shape, at least one of the operating parameters of the temper rolling mill, and the exit-side warped shape, and generating a warped-shape prediction model that receives input data including the pre-cooling warped shape, the entry-side warped shape, and at least one of the operating parameters of the temper rolling mill, and outputs the exit-side warped shape through machine learning using the acquired datasets as training data.

10. In a metal-strip continuous annealing facility including heating equipment that heats a metal strip, cooling equipment that cools the metal strip heated by the heating equipment, a temper rolling mill that corrects a shape of the metal strip cooled by the cooling equipment, and an entry-side warped-shape measurement device that measures an entry-side warped shape, which is a warped shape of the metal strip upstream of the temper rolling mill, between the cooling equipment and the temper rolling mill, a metal-strip warped-shape control device that controls an exit-side warped shape, which is a warped shape of the metal strip downstream of the temper rolling mill, comprising:

an acquisition section that acquires the entry-side warped shape measured by the entry-side warped-shape measurement device, and at least one of operating parameters of the temper rolling mill;
a warped-shape prediction section that predicts the exit-side warped shape using a warped-shape prediction model that receives input data including the entry-side warped shape and at least one of the operating parameters of the temper rolling mill, and outputs the exit-side warped shape; and
an operating-parameter specification section that, in a case where the exit-side warped shape predicted by the warped-shape prediction section exceeds a target value, specifies an operating parameter of the cooling equipment so that the exit-side warped shape is reduced.

11. The metal-strip warped-shape control device according to Claim 10, wherein:

the continuous annealing facility further includes a pre-cooling warped-shape measurement device provided upstream of the cooling equipment;
the acquisition section further acquires a pre-cooling warped shape measured by the pre-cooling warped-shape measurement device; and
the warped-shape prediction section predicts the exit-side warped shape using a warped-shape prediction model that receives input data including the pre-cooling warped shape, the entry-side warped shape, and at least one of the operating parameters of the temper rolling mill, and outputs the exit-side warped shape.

# FIG. 1

EP 4 556 132 A1

FIG. 2

FIG. 3

(a)                    (b)

FIG. 4

FIG. 5

FIG. 6

# FIG. 7

WIDTH DIRECTION OF METAL STRIP

# FIG. 8

# FIG. 9

ENTRY-SIDE
WARPED SHAPE

OPERATING PARAMETERS
OF TEMPER ROLLING MILL

INPUT
LAYER L1

INTERMEDIATE
LAYERS L2

OUTPUT
LAYER L3

# FIG. 10

```
        START

     ACQUIRE DATA        S101

  PREDICT EXIT-SIDE       S102
    WARPED SHAPE

      EXIT-SIDE
  No  WARPED SHAPE        S103
      EXCEEDS TARGET
      VALUE?

           Yes

  SPECIFY OPERATING       S104
   PARAMETER OF
  COOLING DEVICE

  OUTPUT OPERATING        S105
    PARAMETER

  No  END CONTROL?        S106

           Yes

        END
```

## INTERNATIONAL SEARCH REPORT

International application No.

**PCT/JP2023/027673**

### A. CLASSIFICATION OF SUBJECT MATTER

***B21B 37/28***(2006.01)i; ***B21B 1/22***(2006.01)i; ***B21B 37/00***(2006.01)i; ***B21B 37/74***(2006.01)i; ***B21B 38/02***(2006.01)i;
***B21C 51/00***(2006.01)i; ***C21D 9/52***(2006.01)i
FI: B21B37/28 140; B21B1/22 H; B21B37/00 300; B21B37/74 A; B21B38/02; B21C51/00 L; C21D9/52 102

According to International Patent Classification (IPC) or to both national classification and IPC

### B. FIELDS SEARCHED

Minimum documentation searched (classification system followed by classification symbols)

B21B37/28; B21B1/22; B21B37/00; B21B37/74; B21B38/02; B21C51/00; C21D9/52

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-075304 A (NIPPON STEEL & SUMITOMO METAL CORP) 25 April 2013 (2013-04-25) <br> paragraphs [0032]-[0033], fig. 2 | 1-11 |
| A | JP 07-009002 A (KAWASAKI STEEL CORP) 13 January 1995 (1995-01-13) <br> paragraph [0014], fig. 1-2 | 1-11 |
| A | JP 2022-014800 A (JFE STEEL CORP) 20 January 2022 (2022-01-20) <br> paragraph [0014] | 1-11 |
| A | JP 2021-098213 A (JFE STEEL CORP) 01 July 2021 (2021-07-01) <br> paragraphs [0001]-[0015] | 1-11 |

☐ Further documents are listed in the continuation of Box C.  ☑ See patent family annex.

| | |
|---|---|
| *  Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **04 September 2023** | **12 September 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/027673**

| Patent document cited in search report | | | Publication date (day/month/year) | Patent family member(s) | Publication date (day/month/year) |
|---|---|---|---|---|---|
| JP | 2013-075304 | A | 25 April 2013 | (Family: none) | |
| JP | 07-009002 | A | 13 January 1995 | (Family: none) | |
| JP | 2022-014800 | A | 20 January 2022 | (Family: none) | |
| JP | 2021-098213 | A | 01 July 2021 | (Family: none) | |

Form PCT/ISA/210 (patent family annex) (January 2015)

**REFERENCES CITED IN THE DESCRIPTION**

**Patent documents cited in the description**

- JP 6094722 B
- JP 6673285 B
- JP 2013176802 A